# EUROPEAN PATENT SPECIFICATION

(11) **EP 3 356 812 B1**
(45) Date of publication and mention of the grant of the patent: **08.12.2021**
(21) Application number: 16778097.2
(22) Date of filing: 27.09.2016
(51) Int. Cl.: G01N 27/90

(54) **METHOD AND APPARATUS FOR DETECTING FLAWS IN RAILS**
VERFAHREN UND VORRICHTUNG ZUM NACHWEIS VON FEHLSTELLEN IN SCHIENEN
PROCEDE ET APPAREIL DE DETECTION DE DEFAUTS DANS DES RAILS

(30) Priority: 29.09.2015 GB 201517225
(43) Date of publication of application: 08.08.2018
(73) Proprietor: Sperry Rail Holdings, Inc., Shelton, Connecticut 06484 (US)
(72) Inventor: CROCKER, Bob, Derby DE24 8UP (GB); SAUNDERS, Scott, Derby DE24 8UP (GB)
(74) Representative: Abel & Imray
(86) International application number: PCT/GB2016/052995
(87) International publication number: WO 2017/055822

(56) References cited:
- EP-A2- 2 244 923
- WO-A1-2014/053047
- FR-A1- 2 696 550
- JP-A- H11 183 441
- US-A1- 2010 148 767

## Description

### Field of the Invention

The present invention concerns the inspection of rail tracks. More particularly, but not exclusively, this invention concerns an apparatus and method for the inspection of rails in order to detect flaws and/or damage to the rails comprising the rail track.

### Background of the Invention

Engineering components which are electrical conductors can be inspected using electromagnetic techniques. These include but are not limited to eddy current inspection, magnetic flux leakage, residual magnetism, alternating current flow measurement (acfm), and magnetic induction.

All of these techniques rely on either an electromagnetic or magnetic field being created in the vicinity of the surface of the component. A sensor then measures either the absolute properties of the field, or far more commonly, variations of those properties as a function of the spatial relationship between sensor and surface position. Typically the sensor will be scanned across the surface of the component being inspected either by moving the sensor with respect to the component or vice versa. As this relative movement occurs the interaction between the sensor and the field is monitored. Variations in the material of the component close to the surface of the component will then be revealed as local disturbances of the field.

This type of technique has found wide application in many fields of engineering and there are many instances of proprietary equipment that carry out such inspections routinely. The most important uses are for the detection of surface breaking cracks, and in some cases non-surface breaking but close-to-surface cracks. Other uses are in material sorting to differentiate one type of material from another.

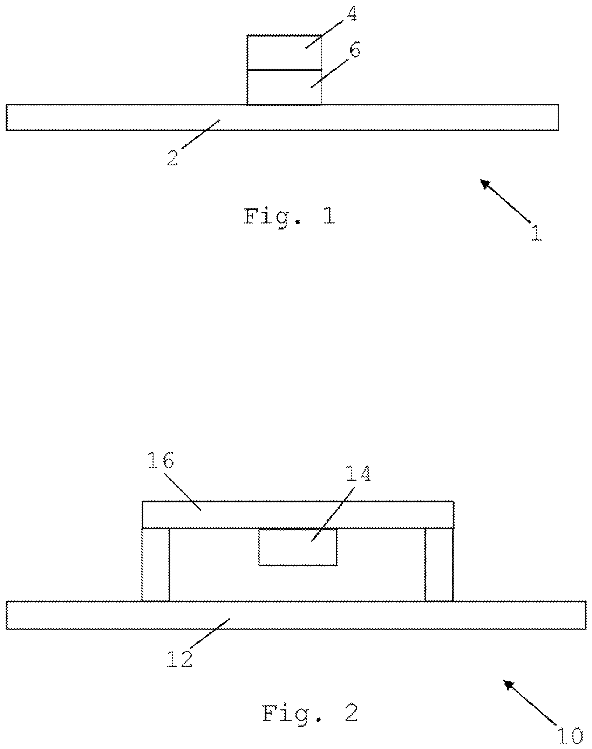

Figure 1 shows a system, indicated generally by the reference numeral 1, in which the principles described above are applied. The system 1 comprises a component under inspection 2, a sensor 4, and a non-magnetic spacer 6. In use, the spacer 6 and the sensor 4 move relative to the component 2. The spacer is sized to provide the appropriate spacing between the sensor 4 and the component 2. In some exemplary applications, the separation is typically required to be of the order of about 1 or 2 millimetres for the sensor to maintain the appropriate sensitivity.

Figure 2 shows a system 10 that is a variant of the system 1 described above. The system 10 comprises a component under inspection 12 and a sensor 14 similar to the component 2 and sensor 4 described above. The system 10 also comprises a mechanical arrangement 16 adapted to separate the component 12 and the sensor 14. In use, the mechanical arrangement 16 (and therefore also the sensor 14) moves relative to the component 12. The separation might typically be required to be of the order of about 1 or 2 millimetres for the sensor to maintain the required sensitivity.

Whilst the techniques described above can be very successful, they suffer from a common significant drawback. The response of the sensor is affected by two things: firstly the variation in the properties of the surface in the vicinity of the sensor, as described briefly above, but secondly the separation of the sensor and the surface under inspection. This latter parameter is often referred to as lift-off.

If the surface under inspection is well-controlled and of uniform and regular shape the sensor can be maintained easily at a known distance from the surface, typically less than 1 mm. However, any variations in this separation will cause variations in the nature and magnitude of the response of the sensor so that any variations in the shape or morphology of the surface will cause significant variations in the output of the sensor. These variations commonly dominate those caused by the material variations.

Consequently a great deal of effort has to be applied to establish a mechanical situation that controls this separation and the effects of lift-off. Conversely, where it is impossible to control the mechanical relationship it is often difficult to produce a satisfactory inspection regime. Thus if any component under inspection is subject to unknown amounts of wear which alter its shape then the results of one of these inspections can be unreliable because of the unknown effects of the consequent variation in lift-off.

Many systems make use of mechanical contact between sensor and component to control this separation but these invariably suffer from wear and the potential for damage where there are unexpected variations in the shape of the component.

European Patent Number 2244923 discloses a rail inspection apparatus in which a spring loaded electromagnetic sensor is located within a tyre, and the tyre is run along a rail during the inspection process and the eddy current readings obtained by the sensor are analysed to determine where cracks in the rail may be present.

The present invention seeks to mitigate the above-mentioned problems. Alternatively or additionally, the present invention seeks to provide an improved rail inspection apparatus and method.

### Summary of the Invention

An embodiment of the present invention provides, according to a first aspect, a rail inspection device comprising a compliant, approximately circular spacer, and a spring-loaded electromagnetic sensor positioned within the approximately circular spacer, wherein the spacer has an inner surface and an outer surface, the distance between the inner surface and outer surface defining the thickness of the spacer, wherein the thickness of the spacer varies around the circumference of the spacer, and the electromagnetic sensor is urged against the inner surface of the spacer such that, in use, the outer surface of the spacer is in contact with the rail under inspection.

The variation in thickness of the spacer may be such that the minimum thickness of the spacer is located circumferentially opposite the maximum thickness of the spacer. The variation in thickness of the spacer may be a smooth variation, such that the thickness of the spacer varies sinusoidally, as the spacer is rolled along a rail. Effectively, the variation in thickness of the spacer means that in use, the electromagnetic sensor is lifted up and down with respect to the rail as the rail inspection device is run along a rail.

Whereas previously the lift-off problem has been addressed by attempting to limit or eliminate the variation in distance between the sensor and the object under inspection, the present invention deals with the lift-off problem in a counter-intuitive way. By providing a spacer with a variable thickness, as the spacer is moved along the rail under inspection, rotating during the movement, a cyclical variation in lift-off is introduced into the measurements taken by the electromagnetic sensor. As the spacer has a fixed diameter and circumference, the spatial frequency of the variation in lift-off is a sinusoid of fixed spatial frequency with a wavelength equal to the circumference of the tyre.

Eddy current sensors typically comprise of a coil of wire through which an alternating current is arranged to be passed. The alternating current in the coil creates an alternating magnetic field around the coil. Bringing the eddy current sensor into proximity to a metal object, for example a rail, brings the metal object into the alternating magnetic field, which creates eddy currents in the metal object. In turn, these eddy currents affect the resistance and impedance of the sensor coil. Conventionally, the resistance (R) and impedance (Z) of the coil are plotted on an Argand diagram, with one axis representing the resistance, and the other axis representing the impedance of the coil. The distance between the coil and the metal object, sometimes known as lift-off, influences the readings obtained by the sensor coil, with the resistance and impedance typically increasing the closer the coil is brought to the metal object. When the coil is brought into proximity to a defect in the metal object, for example a crack, then the eddy currents in the metal object will be affected, and the resistance and impedance of the sensor coil will again change. The variation in the lift-off signal and the crack signal are approximately orthogonal to each other. In order to make the change in readings easier to understand, the axes of the graph shown on a display apparatus may be rotated (also known as adjusting the Argand angle) so that changes in lift-off are represented by horizontal movement, and changes due to defects, such as cracks, are represented by movement in the vertical direction. Often this calibration process is done manually, with a tester manually altering the lift-off of the eddy current sensor, and adjusting the Argand value on the test display apparatus until the movement on the sensor display is approximately horizontal. The movement on the sensor display will then be approximately vertical when moving the sensor from a non-crack to crack part of the metal object under test.

However, this calibration process is obviously time consuming and must be done every time the sensor apparatus is used. Also, if the characteristics of the metal object under test change along the length of the object, for example due to different ageing processes, or different stress levels experienced along the metal object, then the accuracy of the calibration process may be reduced, with the resultant loss of accuracy in the sensor readings.

The inventors of the present invention have realised that introducing a constant sinusoidal variation to the lift-off, via the variation in thickness of the spacer, where the spatial frequency of the variation is known, allows the appropriate Argand angle to be selected, either as a continuous processing of the signal as measurements are being taken, or during a post processing stage once the measurements have been completed.

As the frequency of the variation of the lift-off signal is known, the lift-off signal may be isolated from the rest of the sensor signal using Fourier transforms or applying a narrow band filter to the signal received by the sensor unit. Once the lift-off signal has been isolated, the Argand angle may be adjusted such that the lift-off is represented by the horizontal movement on the sensor display, and any vertical movement may then be attributed to the detection of defects in the metal object under test.

Additionally, the frequency of variation of the lift-off signal will remain constant, because of the shape of the spacer and the way in which the signal is being obtained. Therefore, even if the lift-off effect changes as the metal object is inspected, for example because the material changes in age or hardening as a result of use, the lift-off effect can still be isolated by knowing the frequency of variation, as determined by the size of the tyre. As such, the adjustment of the Argand angle may be made continuously during the measurement process (or as a continuous post-processing step), thereby compensating for any changes to lift-off response as a result of varying characteristics of the metal object under inspection.

The rail inspection device may be mounted on an engine driven train carriage. Alternatively, the rail inspection device may be mounted on a pedestrian controlled unit. A pedestrian controlled unit may be preferable in situations where access by an engine driven train carriage is difficult, for example in station areas. An engine driven train carriage may be preferable when large sections of rail need to be inspected. Both the engine driven train carriage and pedestrian controlled unit may comprise one or more additional sensor units.

The rail inspection device may comprise a locating device, such as a GPS unit. The locating unit may be arranged to log the position of any faults detected by the rail inspection device. Alternatively, the locating unit may be arranged to provide location data corresponding to the electromagnetic sensor data, such that the position of faults may be determined in a post-inspection analysis of the data obtained by the rail inspection device.

The variation in thickness of the spacer may be 0.2mm. The variation in thickness of the spacer may lie in the range between 0.05mm and 1mm. The thickness of the spacer may lie in the range between 1mm and 5mm, or between 1.3mm and 2.3mm. The outer circumference of the spacer may lie in the range between 500mm and 1000mm, or between 530mm and 720mm. The inner circumference of the spacer may range between 500mm and 1000mm, or between 520mm and 716mm. The spacer may comprise various polymeric materials including polyurethane and/or silicone rubber.

The rail inspection device may be associated with a control unit. The control unit may control the alternating current driving the electromagnetic sensor. The control unit may be configured to receive an output from the electromagnetic sensor. The control unit may comprise a signal processing unit, the signal processing unit configured to isolate one or more frequencies in the signal output by the electromagnetic sensor. The signal processing unit may comprise one or more filters. The signal processing unit may be configured to perform one or more Fourier transforms on the signal output by the electromagnetic sensor. The signal processing unit may be configured to perform one or more signal processing steps on the signal output by the electromagnetic sensor.

An embodiment of the present invention provides, according to a second aspect, a method of inspecting a rail comprising the steps of:
providing a rail inspection device as described with reference to the first aspect of the invention,
running the rail inspection device over the rail, thereby producing a sensor output signal comprising an element with a constant sinusoidal lift-off variation, and
isolating the lift-off signal from the remainder of the sensor output signal.

The step of isolating the lift-off signal may comprise passing the sensor output signal through a narrow band filter tuned to the frequency of the constant sinusoidal lift-off variation. The step of isolating the lift-off signal may comprise performing a Fourier transform on the sensor output signal. The frequency of the variation in the lift-off signal will be determined by the sinusoidal variation in thickness of the spacer of the rail inspection device.

The skilled person will appreciate that the sensor output signal may be processed prior to isolating the lift-off signal from the remainder of the sensor output signal. The determination of the direction of the lift-off signal and the crack signal in the impedance plane enables both signals to be rotated so that an excursion along one defined axis (for instance the vertical axis) will represent a crack whilst an excursion along the orthogonal axis (horizontal)will represent lift-off.

Thus the two causes of signal excursion, crack and lift-off, can easily be discriminated by subsequent electronic and software processes.

The method may comprise displaying the output signal of the rail inspection device on a sensor output display. The method may comprise displaying the output signal on a sensor output display utilising I and Q values to represent the variation in the output signal. The method may comprise adjusting the Argand angle of the sensor output apparatus such that the lift-off variation corresponds with one axis of the sensor output display. The method may comprise adjusting the Argand angle of the sensor output apparatus such that the crack signal corresponds with another, perpendicular axis of the sensor output display.

Eddy current inspection according to the method produces two signals, one called the crack signal and the other called the lift-off signal. The method may comprise the step of arranging the sensor apparatus such that the crack signal moves the balance of the sensor in one direction in a two-dimensional crack/lift-off plane. Lift-off moves the balance in a different direction, usually close to orthogonal to the direction of the crack signal. When calibrating a system, the sensor is moved towards and away from the object under test (therefore varying the lift-off), whilst rotating the Argand angle at the same time.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
- Figure 1: shows a first prior art eddy current sensor arrangement;
- Figure 2: shows a second prior art eddy current sensor arrangement;
- Figure 3: shows a rail inspection device according to a first embodiment of the invention;
- Figure 4: shows example measurement I and Q signals plotted against time with an arbitrary Argand angle
- Figure 5: shows the I and Q signals of figure 4 plotted against each other;
- Figure 6: shows the I and Q signals of figure 4 plotted against time with an optimised Argand angle
- Figure 7: shows the I and Q signals of figure 4 plotted against each other with an optimised Argand angle
- Figure 8: shows the lift-off signal obtained by an example measurement according to the method, with an arbitrary Argand angle
- Figure 9: shows the crack signal obtained by the example measurement according to the method, with an arbitrary Argand angle
- Figure 10: shows the lift-off signal as shown in figure 8 with an optimised Argand angle
- Figure 11: shows the crack signal as shown in Figure 9 with the optimised Argand angle.

### Detailed Description

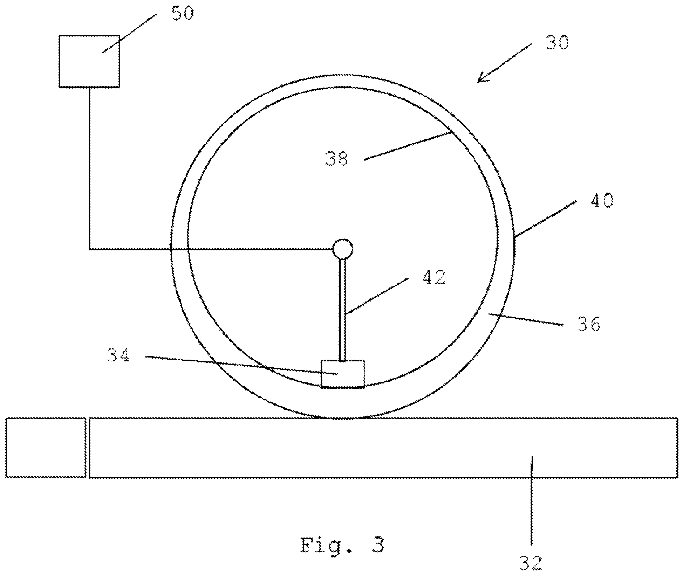

Figure 3 shows a rail inspection device 30 for inspecting a rail 32. The rail inspection device comprises an eddy current sensor 34. The eddy current sensor comprises apparatus for inducing eddy currents in the rail 32 and also detecting the magnetic variation of eddy currents created in the rail 32. The eddy current sensor 34 is located within a spacer 36 which has an inner surface 38 and an outer surface 40. The spacer 36 varies in thickness as shown in an exaggerated manner in figure 3. The eddy current sensor 34 is biased by a biasing device 42. In this case the biasing device 42 is a spring, but the skilled person will appreciate that any suitable biasing device may be used, including but not limited to hydraulic and/or pneumatic biasing devices. The biasing device 42 pushes the sensor 34 into contact with the inner surface 38 of the spacer 36. As can be appreciated from figure 3, as the rail inspection device 30 is run along the rail 32, the spacer 36 rotates, thereby lifting and lowering the eddy current sensor 34 with respect to the rail 32 in a cyclical manner.

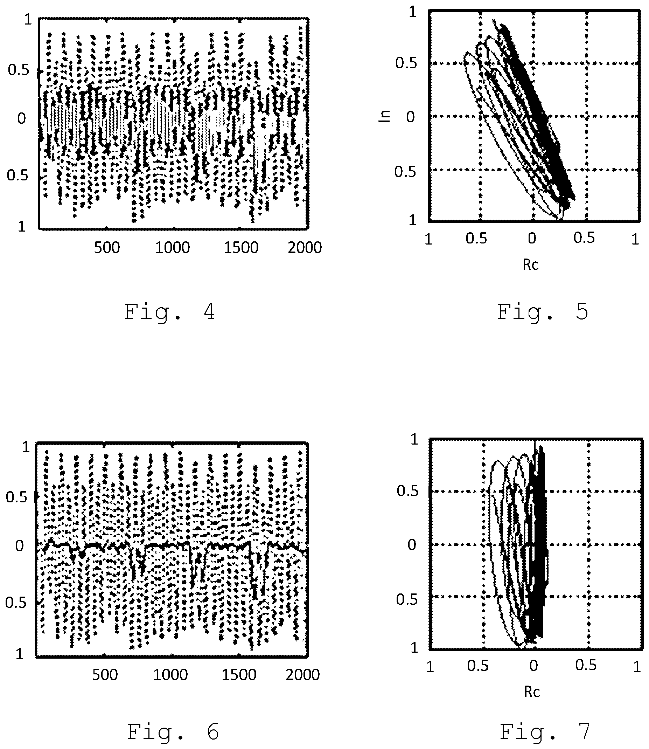

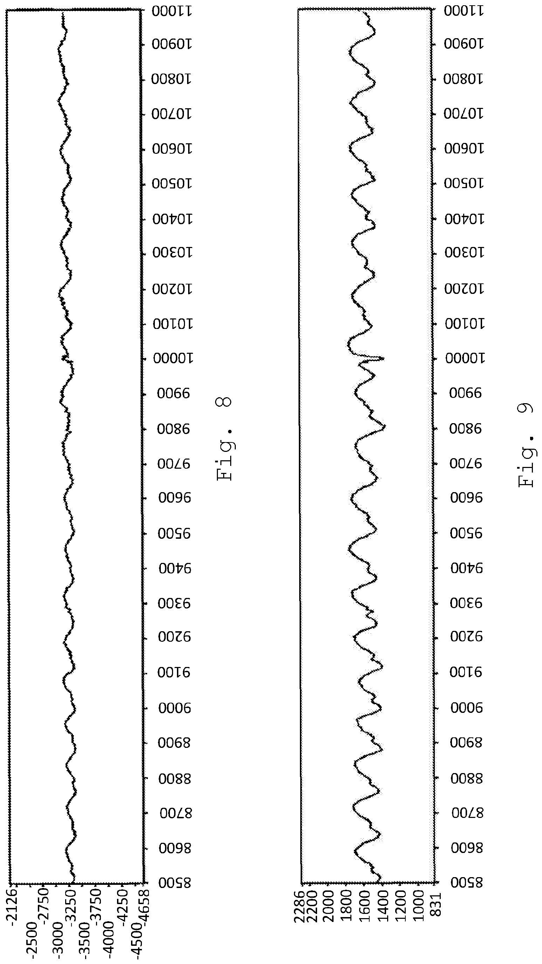

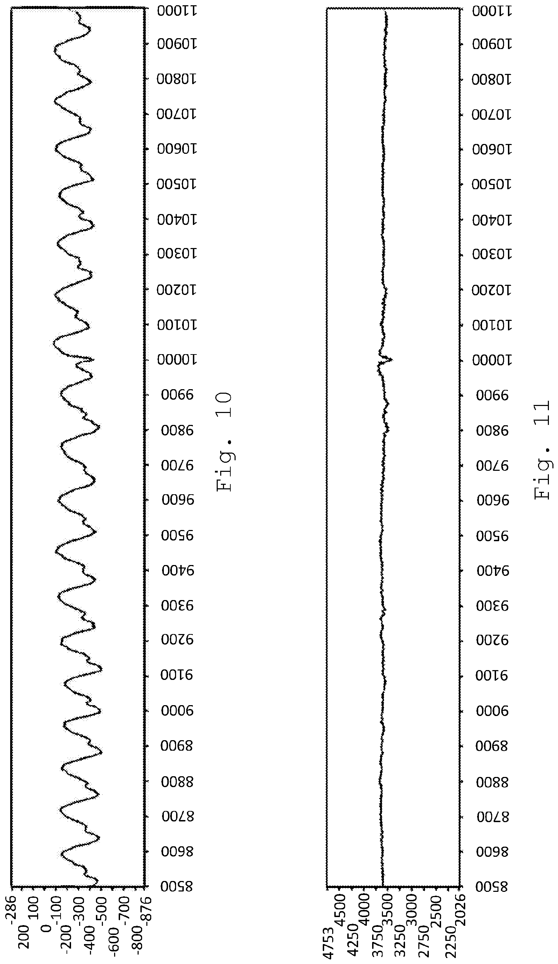

Figure 4 shows an example of the I and Q signals which may be detected by the eddy current sensor 34 plotted against time, as the rail inspection device 30 is run along the rail 32. Figure 5 shows the I and Q values plotted against each other. Figure 6 and 7 correspond to the same measured values as shown in figure 4 and 5, with the Argand angle varied such that the variation in the lift off signal corresponds to the vertical axis of the I and Q plot shown in figure 7. Further explanation of how this may help the crack detection follows with respect to figures 8 to 11. In Figures 8 to 11 the horizontal axis represents distance along the rail in arbitrary units, whilst in Figures 8 and 10 the vertical axis represents lift-off and Figures 9 and 11 represent crack signals in arbitrary units.

Figures 8 and 9 show the I and Q signals (which may respectively be called the lift-off and crack signals), obtained when running the rail inspection device 30 over the rail 32. Figure 8 shows the lift-off signal with an Argand angle of 230 degrees, and figure 9 shows the crack signal which accompanies the lift-off signal at the same Argand angle. As clearly shown, there is a cyclical variation in both signals, with some sort of discrepancy at approximately 10000 as indicated on the X-axis of each graph. Once the data producing both of the graphs as shown in figures 8 and 9 has been obtained, a post processing step may be undertaken by a control apparatus associated with the rail inspection device 30. In some embodiments of the invention, the control apparatus may be a processing unit 50 directly linked to the rail inspection device 30 and receive a direct signal output form the eddy current sensor 34. In alternative embodiments, the control apparatus may be a separate processing unit 50 onto which the signal output from the eddy current sensor 34 is loaded. For example the processing unit 50 may be a remote processing unit 50 onto which eddy current sensor data is loaded via the internet. Such an embodiment may reduce the need to provide processing units physically associated with each rail inspection device.

The processing unit 50 performs a Fourier transform on the I and Q data output by the rail inspection device 30 in order to isolate the lift-off signal from the crack signal. This allows the Argand angle to be adjusted such that the lift-off effect present in the crack signal is nearly eliminated, as shown in figure 11. The anomaly in the crack signal is much more evident in figure 11 than in figure 9, allowing for easier detection of the potential flaw in the rail 32.

As the processing unit 50 is able to processing the signal post acquisition, due to the variation in lift-off signal being known because of the variation in spacer thickness, it is not necessary to adjust the Argand angle as the measurement is being taken. Also, the processing unit 50 is able to adjust the Argand angle as necessary when the material properties of the rail 32 vary, as again the variation in the lift-off signal will remain constant.

Whilst the present invention has been described and illustrated with reference to particular embodiments, it will be appreciated by those of ordinary skill in the art that the invention lends itself to many different variations not specifically illustrated herein.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A rail inspection device (30) comprising a compliant, approximately circular spacer (36), and a spring-loaded electromagnetic sensor (34) positioned within the approximately circular spacer (36), wherein the spacer has an inner surface (38) and an outer surface (40), the distance between the inner surface (38) and outer surface (40) defining the thickness of the spacer, wherein the thickness of the spacer varies around the circumference of the spacer, and the electromagnetic sensor (34) is urged against the inner surface (38) of the spacer such that, in use, the outer surface (40) of the spacer is in contact with the rail under inspection (32) .

2. A rail inspection device (30) as claimed in claim 1, wherein the rail inspection device (30) is mounted on an engine driven train carriage.

3. A rail inspection device (30) as claimed in any of claims 1 or 2, wherein the rail inspection device (30) is mounted on a pedestrian controlled unit.

4. A rail inspection device (30) as claimed in any preceding claim, wherein the rail inspection device (30) comprises a locating device.

5. A rail inspection device (30) as claimed in any preceding claim, the rail inspection device (30) being associated with a control unit (50).

6. A rail inspection device (30) as claimed in claim 5, wherein the control unit (50) is arranged to control the alternating current driving the electromagnetic sensor (34) .

7. A rail inspection device (30) as claimed in claim 5 or 6, wherein the control unit (50) is configured to receive an output from the electromagnetic sensor (34).

8. A rail inspection device as claimed in any of claims 5 to 7, wherein the control unit comprise a signal processing unit, the signal processing unit configured to isolate one or more frequencies in the signal output by the electromagnetic sensor.

9. A method of inspecting a rail (32) comprising the steps of:
providing a rail inspection device (30) as claimed in claim 1,
running the rail inspection device (30) over a rail (32), thereby producing a sensor output signal comprising an element with a constant sinusoidal lift-off variation, and
isolating the lift-off signal from the remainder of the sensor output signal.

10. A method as claimed in claim 9, wherein the step of isolating the lift-off signal comprises passing the sensor output signal through a narrow band filter tuned to the frequency of the constant sinusoidal lift-off variation.

11. A method as claimed in claim 9, wherein the step of isolating the lift-off signal comprises performing a Fourier transform on the sensor output signal.

12. A method as claimed in any of claims 9 to 11, wherein the method comprises the step of displaying the output signal of the rail inspection device on a sensor output display.

13. A method as claimed in claim 12, the method comprising the step of displaying the output signal on a sensor output display utilising I and Q values to represent the variation in the output signal.

14. A method as claimed in claim 13, the method comprising the step of adjusting the Argand angle of the sensor output apparatus such that the lift-off variation corresponds with one axis of the sensor output display.

15. A method as claimed in claim 14, the method comprising the step of adjusting the Argand angle of the sensor output apparatus such that the crack signal corresponds with another, perpendicular axis of the sensor output display.

## Patentansprüche

1. Schieneninspektionsvorrichtung (30) mit einem konformen, annähernd kreisförmigen Abstandshalter (36) und einem federbelasteten elektromagnetischen Sensor (34), der innerhalb des annähernd kreisförmigen Abstandshalters (36) positioniert ist, bei der der Abstandshalter eine innere Oberfläche (38) und eine äußere Oberfläche (40) aufweist, bei denen der Abstand zwischen der inneren Oberfläche (38) und äußeren Oberfläche (40) die Dicke des Abstandshalters definiert, bei dem die Dicke des Abstandshalters um den Umfang des Abstandshalters herum variiert, und der elektromagnetische Sensor (34) gegen die innere Oberfläche (38) des Abstandshalters gedrängt wird, so dass, bei Verwendung, die äußere Oberfläche (40) des Abstandshalters mit der inspizierten Schiene (32) in Kontakt ist.

2. Schieneninspektionsvorrichtung (30) wie in Anspruch 1 beansprucht, bei der die Schieneninspektionsvorrichtung (30) auf einem motorbetriebenen Zugwagen montiert ist.

3. Schieneninspektionsvorrichtung (30) wie in einem der Ansprüche 1 oder 2 beansprucht, bei der die Schieneninspektionsvorrichtung (30) auf einer von einem Fußgänger gesteuerten Einheit montiert ist.

4. Schieneninspektionsvorrichtung (30) wie in einem vorhergehenden Anspruch beansprucht, bei der die Schieneninspektionsvorrichtung (30) eine Lokalisierungsvorrichtung aufweist.

5. Schieneninspektionsvorrichtung (30) wie in einem vorhergehenden Anspruch beansprucht, die mit einer Steuerungseinheit (50) assoziiert ist.

6. Schieneninspektionsvorrichtung (30) wie in Anspruch 5 beansprucht, bei der die Steuerungseinheit (50) so angeordnet ist, dass sie den Wechselstrom, der den elektromagnetischen Sensor (34) betreibt, steuert.

7. Schieneninspektionsvorrichtung (30) wie in Anspruch 5 oder 6 beansprucht, bei der die Steuerungseinheit (50) dazu ausgebildet ist, eine Ausgabe von dem elektromagnetischen Sensor (34) zu empfangen.

8. Schieneninspektionsvorrichtung wie in einem der Ansprüche 5 bis 7 beansprucht, bei der die Steuerungseinheit eine Signalverarbeitungseinheit aufweist, die dazu ausgebildet ist, eine oder mehrere Frequenzen in dem Signal, das durch den elektromagnetischen Sensor ausgegeben wird, zu isolieren.

9. Verfahren zum Inspizieren einer Schiene (32) mit den Schritten:
Vorsehen einer Schieneninspektionsvorrichtung (30) wie in Anspruch 1 beansprucht,
Fahren der Schieneninspektionsvorrichtung (30) über eine Schiene (32), so dass dadurch ein Sensorausgangssignal erzeugt wird, das ein Element mit einer konstanten sinusförmigen Abhebevariation aufweist, und
Isolieren des Abhebesignals aus dem Rest des Sensorausgangssignals.

10. Verfahren wie in Anspruch 9 beansprucht, bei dem der Schritt eines Isolierens des Abhebesignals ein Durchleiten des Sensorausgangssignals durch ein schmales Bandfilter, das auf die Frequenz der konstanten sinusförmigen Abhebevariation abgestimmt ist, umfasst.

11. Verfahren wie in Anspruch 9 beansprucht, bei dem der Schritt eines Isolierens des Abhebesignals ein Durchführen einer Fourier-Transformation auf dem Sensorausgangssignal umfasst.

12. Verfahren wie in einem der Ansprüche 9 bis 11 beansprucht, bei dem das Verfahren den Schritt eines Anzeigens des Ausgangssignals der Schieneninspektionsvorrichtung auf einer Sensorausgangsanzeige umfasst.

13. Verfahren wie in Anspruch 12 beansprucht, mit dem Schritt eines Anzeigens des Ausgangssignals auf einer Sensorausgangsanzeige unter Nutzung von I- und Q-Werten zum Darstellen der Variation in dem Ausgangssignal.

14. Verfahren wie in Anspruch 13 beansprucht, mit dem Schritt eines Anpassens des Argand-Winkels der Sensorausgangsvorrichtung, so dass die Abhebevariation einer Achse der Sensorausgangsanzeige entspricht.

15. Verfahren wie in Anspruch 14 beansprucht, mit dem Schritt eines Anpassens des Argand-Winkels der Sensorausgangsvorrichtung, so dass das Risssignal einer anderen, senkrechten Achse der Sensorausgangsanzeige entspricht.

## Revendications

1. Dispositif d'inspection de rail (30) comprenant une entretoise souple approximativement circulaire (36), et un capteur électromagnétique à ressort (34) positionné à l'intérieur de l'entretoise approximativement circulaire (36), dans lequel l'entretoise comporte une surface interne (38) et une surface externe (40), la distance entre la surface interne (38) et la surface externe (40) définissant l'épaisseur de l'entretoise, dans lequel l'épaisseur de l'entretoise varie autour de la circonférence de l'entretoise, et le capteur électromagnétique (34) est poussé contre la surface interne (38) de l'entretoise de sorte que, lors de l'utilisation, la surface externe (40) de l'entretoise soit en contact avec le rail soumis à une inspection (32).

2. Dispositif d'inspection de rail (30) selon la revendication 1, dans lequel le dispositif d'inspection de rail (30) est monté sur un wagon de train entraîné par un moteur.

3. Dispositif d'inspection de rail (30) selon l'une quelconque des revendications 1 ou 2, dans lequel le dispositif d'inspection de rail (30) est monté sur une unité commandée par un conducteur à pied.

4. Dispositif d'inspection de rail (30) selon une quelconque revendication précédente, dans lequel le dispositif d'inspection de rail (30) comprend un dispositif de localisation.

5. Dispositif d'inspection de rail (30) selon une quelconque revendication précédente, le dispositif d'inspection de rail (30) étant associé à une unité de commande (50).

6. Dispositif d'inspection de rail (30) selon la revendication 5, dans lequel l'unité de commande (50) est agencée pour commander le courant alternatif alimentant le capteur électromagnétique (34).

7. Dispositif d'inspection de rail (30) selon la revendication 5 ou 6, dans lequel l'unité de commande (50) est conçue pour recevoir une sortie du capteur électromagnétique (34).

8. Dispositif d'inspection de rail (30) selon l'une quelconque des revendications 5 à 7, dans lequel l'unité de commande comprend une unité de traitement de signal, l'unité de traitement de signal conçue pour isoler une ou plusieurs fréquences dans le signal produit par le capteur électromagnétique.

9. Procédé d'inspection d'un rail (32) comprenant les étapes de :
fourniture d'un dispositif d'inspection de rail (30) selon la revendication 1,
utilisation du dispositif d'inspection de rail (30) sur un rail (32), produisant ainsi un signal de sortie de capteur comprenant un élément ayant une variation de lift-off sinusoïdale constante, et
isolement du signal de lift-off du reste du signal de sortie de capteur.

10. Procédé selon la revendication 9, dans lequel l'étape d'isolement du signal de lift-off comprend le passage du signal de sortie de capteur à travers un filtre à bande étroite accordé sur la fréquence de la variation de lift-off sinusoïdale constante.

11. Procédé selon la revendication 9, dans lequel l'étape d'isolement du signal de lift-off comprend la réalisation d'une transformée de Fourier sur le signal de sortie de capteur.

12. Procédé selon l'une quelconque des revendications 9 à 11, dans lequel le procédé comprend l'étape d'affichage du signal de sortie du dispositif d'inspection de rail sur un afficheur de sortie de capteur.

13. Procédé selon la revendication 12, le procédé comprenant l'étape d'affichage du signal de sortie sur un afficheur de sortie de capteur utilisant les valeurs I et Q pour représenter la variation du signal de sortie.

14. Procédé selon la revendication 13, le procédé comprenant l'étape de réglage de l'angle d'Argand de l'appareil de sortie de capteur de sorte que la variation de lift-off corresponde à un axe de l'afficheur de sortie de capteur.

15. Procédé selon la revendication 14, le procédé comprenant l'étape de réglage de l'angle d'Argand de l'appareil de sortie de capteur de sorte que le signal de fissure corresponde à un autre axe, perpendiculaire, de l'afficheur de sortie de capteur.
